# EUROPEAN PATENT APPLICATION

(11) **EP 2 942 688 A1**
(43) Date of publication of application: **11.11.2015**
(21) Application number: 14305662.0
(22) Date of filing: 05.05.2014
(51) Int. Cl.: G05D 1/10, G05D 1/00

(54) **Flying drone and method for controlling a flying drone**

(71) Applicant: Puy du Fou International, 85590 Les Epesses (FR); ACT Lighting Design, 2520 Ranst (BE)
(72) Inventor: Buys, Koen, 1981 Hofstade (BE); Bolsee, Benoit, 1180 Uccle (BE); Felinto, Dalai Quintanilha, 22291-180 Rio de Janeiro (BR)
(74) Representative: Novagraaf Technologies

(57) **Abstract**

A flying drone comprising:
• a memory for storing a forecasted flying trajectory, said trajectory being defined by a list of 3D coordinates points and comprising a main trajectory and at least one alternative trajectory, said main and alternative trajectories being each defined by a sublist of 3D coordinates points;
• a control and command computer for driving drone directional and motorization means, said control and command computer being connected to the memory for reading the forecasted trajectory so that the flying drone is able to move along said forecasted trajectory, said control and command computer being adapted to read said alternative trajectory in the memory so that the flying drone is able to move along said alternative trajectory only if at least one predetermined condition is verified.

## Description

### Field of the Invention

The present invention relates to flying drones, and notably to Vertical Take-Off Landing (VTOL) flying drones. The present invention relates more particularly but not exclusively to methods for controlling a flying drone trajectory.

### Background

There is currently a tremendous development of technologies in the field of flying drones, also called Unmanned Aerial Vehicles (UAV). As is known, these flying drones comprise a memory for storing a forecasted flying trajectory and a control and a command computer for driving drone directional and motorization means. The trajectory is defined by a list of 3D coordinates points, and the control and command computer is connected to the memory for reading the forecasted trajectory so that the flying drone is able to move along said forecasted trajectory.

However, in case of emergency, for example in case of failure of one of the directional and motorization means, comes the problem of the repatriation of the flying drone on the ground, in a safely manner. This problem is exacerbated when several autonomous flying drones have to move together in a given space, since the risk of a flying drones collision during the repatriation of said flying drone is dramatically increased. In particular, if the flying drones are synchronized as for their respective movements, the repatriation trajectory of the flying drone, based on the time of repatriation which is by definition random, must not interfere with the movement of the other flying drones.

In the context of VTOL flying drones, a known solution for repatriating the flying drone consists in a system that includes a central remote control unit adapted to communicate wirelessly with the flying drones. In order to repatriate one of the flying drones, for example in case of emergency, a human operator uses the remote control unit so as to manually fly the drone. However, such a system is based on human factors, i.e the accuracy of vision of the operator and the flying skills of this operator, which are by definition fallible. This has the disadvantage of providing little reliability and safety.

### Summary

To overcome at least one of the aforementioned drawbacks, an object of this invention is a flying drone comprising:
- a memory for storing a forecasted flying trajectory, said trajectory being defined by a list of 3D coordinates points and comprising a main trajectory and at least one alternative trajectory, said main and alternative trajectories being each defined by a sublist of 3D coordinates points;
- a control and command computer for driving drone directional and motorization means, said control and command computer being connected to the memory for reading the forecasted trajectory so that the flying drone is able to move along said forecasted trajectory, said control and command computer being adapted to read said alternative trajectory in the memory so that the flying drone is able to move along said alternative trajectory only if at least one predetermined condition is verified.

Advantageously, the features wherein the forecasted flying trajectory comprises a main trajectory and at least one alternative trajectory, said main and alternative trajectories being each defined by a sublist of 3D coordinates points, and the control and command computer is adapted to read said alternative trajectory in the memory so that the flying drone is able to move along said alternative trajectory only if at least one predetermined condition is verified provide a reliable solution allowing the flying drone to be repatriated safely on the ground in case of emergency.

The flying drone may include additional features considered separately or combined, and notably:
- the flying drone further comprises at least one sensor adapted to provide sensor data to the control and command computer, the verification of said at least one predetermined condition being based at least on said sensor data;
- the sensor is selected from the group consisiting of : an accelerometer, a gyroscope, a magnetometer, a GNSS receiver, a battery sensor, a motor position sensor, a sensor of a motor current, a Hall effect sensor, a barometric sensor and a virtual sensing type sensor;
- the sublist defining the alternative trajectory is associated to one of the 3D coordinates points of the sublist defining the main trajectory, said 3D coordinates point being the first point of the sublist defining the alternative trajectory;
- the 3D coordinates points are stored as GNSS coordinates and said flying drone further comprises a GNSS receiver connected to said control and command computer for controlling the drone trajectory;
- the flying drone further comprises:
   - a wireless receptor able to receive a synchronization signal emitted by a timecode;
   - the 3D coordinates points are associated to a timeline;
   - the control and command computer is adapted for synchronizing the flying drone timeline with the synchronization signal;
- the timeline is implemented by adding to each 3D coordinates point a time relative to either the time of the previous 3D coordinates point either to a reference time.

In another embodiment of the invention, a system comprises a plurality of flying drones as described above and a central coordinator comprising a wireless emitter, the wireless emitter being adapted for transmitting data to the flying drones via a wireless data link.

The system may include additional features considered separately or combined, and notably:
- the central coordinator stores a timecode and further comprises a timecode reading module connected to the wireless emitter, the wireless emitter being adapted to transmit to the wireless receptor of each drone a synchronization signal from the timecode;
- the central coordinator further comprises means for controlling a lighting system and/or a sound system and said timecode has light and/or sound synchronization elements so that the drones, the light and/or the sound are synchronized together;
- the central coordinator further comprises a control and command unit adapted for triggering the execution of the or each alternative trajectory in each flying drone, said control and command unit being connected to the wireless emitter.

In another embodiment of the invention, a method for controlling a flying drone trajectory, said drone comprising:
- a memory for storing a forecasted flying trajectory, the forecasted flying trajectory comprising a main trajectory and at least one alternative trajectory;
- a control and command computer for driving drone directional and motorization means, said control and command computer being connected to the memory for reading the forecasted trajectory so that the flying drone is able to move along said forecasted trajectory, said control and command computer being adapted to read said alternative trajectory in the memory so that the flying drone is able to move along said alternative trajectory only if at least one predetermined condition is verified;
comprises:
- storing in said memory a forecasted flying trajectory defined by a list of 3D coordinates points, the main and alternative trajectories being each defined by a sublist of 3D coordinates points;
- executing the main trajectory;
- testing if the at least one predetermined condition is verified;
- if the at least one predetermined condition is verified, executing the alternative trajectory.

Advantageously, the method may include the additional feature wherein the flying drone further comprises a wireless receptor, the 3D coordinates points of the list of 3D coordinates points are associated to a timeline and the control and command computer is adapted for synchronizing the flying drone timeline with a synchronization signal, and wherein the method further comprises, between the step of storing the forecasted flying trajectory and the step of executing the main trajectory:
- receiving through the wireless receptor a synchronization signal emitted by a timecode;
- synchronizing the timeline with the synchronization signal.

Advantageously, this additional feature allows a simple, flexible and accurate synchronization between a plurality of flying drones, using a low bandwith and without requiring any central complex position calculation.

### Brief Description of the Figures

Some embodiments of apparatus and/or methods in accordance with embodiments of the present invention are now described, by way of example only, and with reference to the accompagnying drawings, in which :
- The Figure 1 schematically illustrates a system according to an embodiment of the invention, the system comprising three flying drones and a central coordinator, each flying drone comprising a memory for storing a list of 3D coordinates points,
- The Figure 2 schematically illustrates the content of one of the lists of 3D coordinates points of Figure 1,
- The Figure 3 schematically illustrates a system according to an alternative embodiment of the invention, the system comprising three flying drones, a central coordinator, and a simulation device,
- The Figure 4 is a flowchart illustrating a method for controlling the trajectory of one of the flying drones of Figures 1 or 3 according to an embodiment of the invention.

### Description of Embodiments

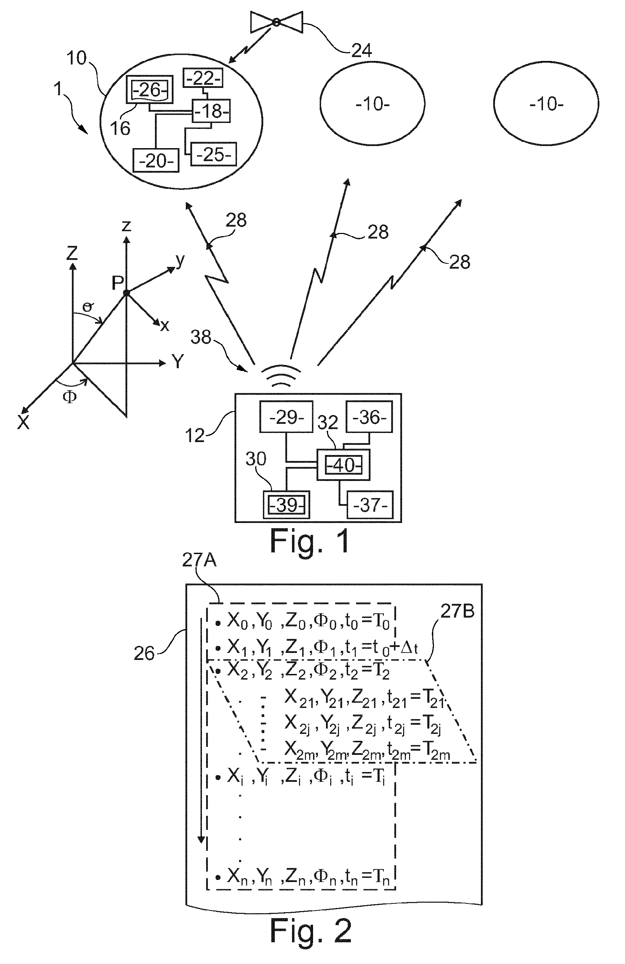

In the following, it is referred to a fixed orthogonal frame including a horizontal plane X, Y and a vertical axis Z, and to a mobile orthogonal frame related to a given device P and including a horizontal plane x, y and a vertical axis z. The origin of the mobile orthogonal frame is located at the center of the device P and indicates the orientation of the device P. In the following, it is also referred to spherical coordinates with angles theta e (0° ...90°) and phiφ (0° ...360°). The coordinate of the given device P aφng the vertical axis Z corresponds to the altitude of said device P, as illustrated on Figure 1. The angle φ corresponds to the rotation angle of the mobile horizontal plane x, y in the fixed orthogonal frame, with respect to the vertical axis Z.

Hereafter is notably disclosed a system 1 which comprises at least one flying drone 10 and a central coordinator 12.

In the exemplary embodiment of Figure 1, the system 1 comprises three flying drones 10, each flying drone 10 being a VTOL flying drone.

Each flying drone 10 comprises a memory 16, and a control and command computer 18 connected to the memory 16.

Preferably, as shown in Figure 1, each flying drone 10 is further equipped with a wireless receptor 20 connected to the control and command computer 18 and with positioning means 22 adapted for communicating with a satellite positioning system 24. Preferably, each flying drone 10 is further equipped with at least one sensor 25 connected to the control and command computer 18. In the exemplary embodiment of Figure 1, each flying drone 10 comprises one sensor 25. Conventionally, each flying drone 10 further comprises autonomous power sources and directional and motorization means which are for example formed of one or several propellers, one or several motors, one or several sensors and/or one or several motordrive devices. These elements are not illustrated on Figure 1 for clarity reasons. In a particular embodiment, each flying drone 10 is adapted for supporting one or more payload elements, such as for example lighting devices, such payload elements being not shown in Figure 1 for clarity.

The memory 16 stores a forecasted flying trajectory. The forecasted flying trajectory is defined by a list 26 of 3 dimensions (3D) coordinates points. The forecasted flying trajectory comprises a main trajectory and at least one alternative trajectory. The main and alternative trajectories are each defined by a sublist 27A, 27B of 3D coordinates points, as shown on Figure 2. In the exemplary embodiment of Figure 2, the forecasted flying trajectory comprises one main trajectory, defined by a main sublist 27A of 3D coordinates points, and one alternative trajectory, defined by an alternative sublist 27B of 3D coordinates points.

The 3D coordinates points are advantageously associated to a timeline and define a list of waypoints. The list 26 is for example in the form of a file. In the exemplary embodiment of Figures 1 and 2, the list 26 is in the form of a file that is marked up in the Extensible Markup Language (XML). In this exemplary embodiment, apart from n sets of 3D coordinates values Xi, Yi, Zi, the main sublist 27A further comprises n orientation angle values φᵢ. Each set of 3D coordinates values Xi, Yi, Zi defines a waypoint. For example, the first set of 3D coordinates values X1, Y1, Z1 defines a takeoff waypoint and the last set of 3D coordinates values Xn, Yn, Zn defines a landing waypoint, as will be further described below. Each orientation angle value φᵢ is associated to one set of 3D coordinates values Xi, Yi, Zi, i.e. to one waypoint. This allows to futher define, for each waypoint, the orientation of the flying drone 10 with respect to the vertical axis Z, and thus to enhance the positioning accuracy of the flying drone 10. In this exemplary embodiment, the timeline is implemented by adding to each set of 3D coordinates values Xi, Yi, Zi a time ti. Each time ti is thus associated to one set of 3D coordinates values Xi, Yi, Zi and to one orientation angle value φᵢ. Preferably, as illustrated on Figure 2, each time ti is relative to either the time of the previous 3D coordinates point, for example by means of an offset value Δt, either to a reference time T0, T2, Tn. This allows increasing the flexibility of the implementation of the timeline.

Preferably, as illustrated on Figure 2, the alternative sublist 27B is associated to one of the 3D coordinates points of the main sublist 27A, said point being the first point of the alternative sublist 27B. In the exemplary embodiment of Figure 2, the alternative sublist 27B comprises m sets of 3D coordinates values X₂ⱼ, Y₂ⱼ, Z₂ⱼ associated to angle values φ₂ⱼ. The alternative sublist 27B is further associated to the waypoint X2, Y2, Z2 and to the orientation angle value φ₂. The waypoint X2, Y2, Z2 is the first point of the alternative sublist 27B and thus belongs to both the main sublist 27A and the alternative sublist 27B.

In a particular embodiment, which is not illustrated on the Figures, the main sublist 27A, respectively the alternative sublist 27B, further comprises n velocity values, respectively m velocity values, each velocity value being associated to one set of 3D coordinates values Xi, Yi, Zi, respectively X₂ⱼ, Y₂ⱼ, Z₂ⱼ. Thanks to this feature combined with the application of a known interpolation algorithm, the flying drone 10 is able to retrace a flying trajectory that follows a Beziers curve. The use of Beziers curves allows to homogenize the flying trajectories of the flying drones, as will be described in further details below.

The control and command computer 18 is for example formed of a processor. The control and command computer 18 is adapted for driving the drone directional and motorization means. The control and command computer 18 is further adapted for reading the forecasted trajectory stored in the memory 16 so that the flying drone 10 is able to move along said forecasted trajectory. In particular, the control and command computer 18 is adapted for reading the main trajectory so that the flying drone 10 is able to move along said main trajectory, and for reading the or each alternative trajectory so that the flying drone 10 is able to move along said alternative trajectory only if at least one predetermined condition is verified.

Preferably, the control and command computer 18 is further adapted for synchronizing the timeline with a synchronization signal 28 emitted from a timecode. In the exemplary embodiment of Figure 2, the control and command computer 18 is adapted to synchronize the first time t0 with the synchronization signal 28, to read the content of the list 26 and to send control signals to the directional and motorization means in order to move sequentially the flying drone 10 to each waypoint Xi, Yi, Zi, respectively X₂ⱼ, Y₂ⱼ, Z₂ⱼ at the corresponding time ti, respectively t₂ⱼ, with the corresponding angle orientation φᵢ, respectively φ₂ⱼ. In a particular embodiment, the control and command computer 18 is further adapted for sending control signals to payload elements that are supported by the flying drone 10.

The wireless receptor 20 is able to receive the synchronization signal 28.

The positioning means 22 are connected to the control and command computer 18 for controlling the drone trajectory. In the exemplary embodiment of Figure 1, the positioning means 22 are for example formed of a Global Navigation Satellite System (GNSS) receiver. According to this embodiment, the 3D coordinates points are stored in the memory 16 as GNSS coordinates.

The sensor 25 is adapted to provide sensor data to the control and command computer 18. In the exemplary embodiment of Figure 1, the sensor 25 is a battery sensor connected to a battery of the flying drone 10, and the sensor data is a signal indicating a correct or insufficient charge level of the battery. Alternatively, the battery sensor 25 is replaced by an accelerometer, a gyroscope, a magnetometer, a GNSS receiver, a motor position sensor, a sensor of a motor current, a Hall effect sensor, a barometric sensor and a virtual sensing type sensor.

The verification of the predetermined condition by the control and command computer 18 is based at least on the sensor data provided by the sensor 25. For example, in the embodiment shown on Figure 1, the predetermined condition is verified if the signal provided by the battery sensor 25 indicates an insufficient charge level of the battery. This allows a quick and reliable execution of the alternative trajectory by the flying drone 10 in case of emergency.

The central coordinator 12 is arranged at a fixed location, for example on the ground. The central coordinator 12 comprises a wireless emitter 29. Preferably, in a particular embodiment illustrated in Figure 1, the central coordinator 12 further comprises a memory 30 and a control and command unit 32 connected to the wireless emitter 29 and to the memory 30. As shown in Figure 1, the central coordinator 12 further comprises means 36 for controlling a lighting system and/or a sound system and a user interface 37, said controlling means 36 and user interface 37 being each connected to the control and command unit 32.

The wireless emitter 29 is adapted for transmitting data to the flying drones 10 via a wireless link 38. In the particular embodiment illustrated in Figure 1, the wireless emitter 29 is adapted, upon reception of transmitting instructions from the control and command unit 32, to transmit the synchronization signal 28 to the wireless receptor 20 of each flying drone 10.

In the exemplary embodiment of Figure 1, the wireless link 38 is formed of two wireless sublinks : a first radiofrequency-type sublink and a second Wifi-type sublink which complies with the Institute of Electrical and Electronics Engineers' (IEEE) 802.11 standard. This redundancy of wireless links allows improving the reliability of communication between the central coordinator 12 and the flying drones 10.

Advantageously, the memory 30 stores a timecode 39. The timecode 39 is a time reference, more precisely a sequence of digital codes generated at predetermined intervals and sent to various devices of the central coordinator 12. One of the digital codes is sent at least once to the wireless emitter 29, via the control and command unit 32, and corresponds to a clock initialization time of the synchronization signal 28. In a particular embodiment, the digital code corresponding to the clock initialization time of the synchronization signal 28 is periodically sent to the wireless emitter 29 for performing a periodic transmission of the synchronization signal 28 to the flying drones 10. This allows to enhance the security of the system 1. In the exemplary embodiment of Figure 1, some other digital codes of the timecode 39 are sent to the means 36 for controlling a lighting system and/or a sound system, via the control and command unit 32, so that the flying drones 10, the light and/or the sound are synchronized together. The timecode 39 is thus intended to synchronize several physical components of a system, such as for example the physical components of an entertainment sound, light and motion system. In the exemplary embodiment of Figure 1, the timecode 39 is a Society of Motion Picture and Television Engineers (SMPTE) timecode.

The control and command unit 32 is adapted for triggering the execution of the or each alternative trajectory in each flying drone 10. More precisely, the control and command unit 32 is adapted for generating a signal corresponding to an instruction for executing the or one of the alternative trajectory(ies) in each flying drone 10, and for transmitting this signal to the flying drones 10, via the wireless emitter 29 and the wireless link 38. This feature, in combination with the feature wherein the central coordinator 12 comprises a user interface 37, allows a user to manually manage the execution of one or several alternative trajectories in the flying drones. This provides flexibility for the user as to the execution of the alternative trajectories, even if the at least one predetermined condition is not verified, and is for example useful in case of real-time management of an entertainment motion system.

The control and command unit 32 is for example a processor. Advantageously, the control and command unit 32 comprises a timecode reading module 40 adapted to read the timecode 39 stored in the memory 30.

The controlling means 36 are adapted, upon reception of transmitting instructions from the timecode reading module 40, to transmit control signals to the lighting system and/or to the sound system, which are not illustrated on the Figures.

In the exemplary embodiment of Figure 1, the user interface 37 is formed of a touchscreen. Alternatively, the user interface 37 is formed of a mechanical button. The user interface 37 allows a user to input an instruction for triggering the execution of the or or one of the alternative trajectory(ies) in the set of flying drones 10, or in some of the flying drones 10.

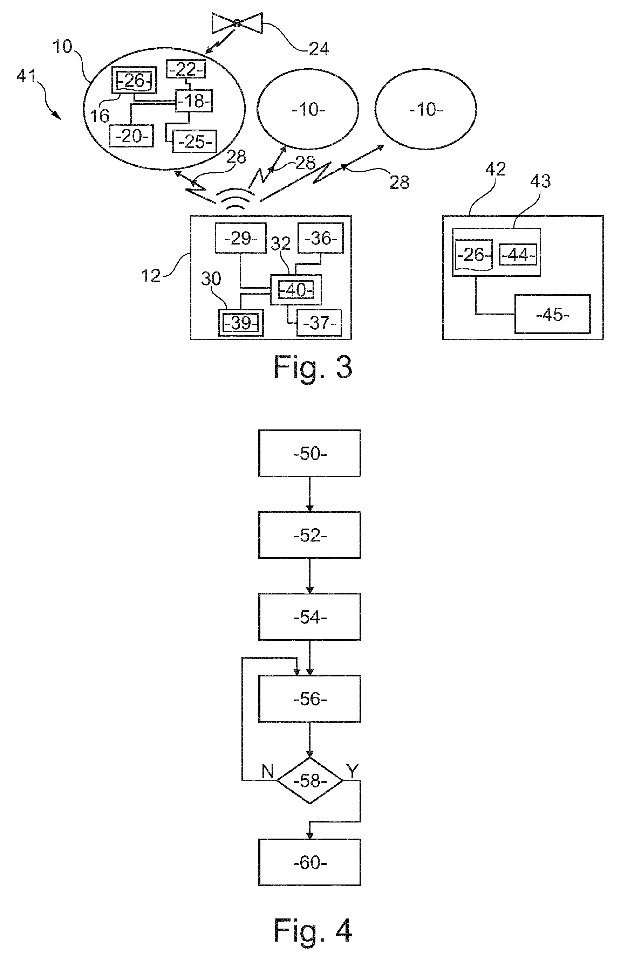

Figure 3 illustrates a system 41 according to an alternative embodiment of the invention, complementary but independent of the embodiment shown in Figure 1. In this embodiment, elements similar to the previous embodiment are denoted by identical references, and are therefore not described again. In this embodiment the system 41 according to the invention further comprises a simulation device 42.

The simulation device 42 is for example formed of a computer system which includes a memory 43 storing a simulation software 44, and a processor 45 connected to the memory 43. The simulation device 42 is adapted to operate in an offline mode.

The simulation software 44 is adapted, when executed by the processor 45, to simulate a trajectory of at least one of the flying drones 10 and to generate at least one of said forecasted flying trajectory comprising a list 26 of 3D coordinates points, based on the results of the simulation. The simulation software 44 thus notably allows a user to visualize any potential movement incompatibility between at least two flying drones 10. Preferably, the simulation device 42 further includes means for transmitting the or each generated flying trajectory to the corresponding flying drone 10, said transmitting means not being illustrated on the Figures for clarity purpose.

Preferably, the simulation software 44 is further adapted to define a predetermined 2D or 3D zone around each simulated flying drone, said predetermined zone moving, during the simulation, with the corresponding flying drone along the simulated flying trajectory. The predetermined zone corresponds to a security zone and allows performing security tests and/or security checks concerning potential collisions between the drones. This feature advantageously allows reducing the risk of collision between the flying drones 10, and thus increasing the security of the system 1.

Preferably, the simulation software 44 is further adapted to simulate the or each alternative trajectory of at least one of the flying drones 10 so as to ensure that said alternative trajectory does not interfere with the movement of the other flying drones 10. This feature advantageously allows reducing the risk of collision between the flying drones 10 during the repatriation of one of the flying drones 10 onto the ground.

Preferably, the simulation software 44 is further adapted, when executed by the processor 45, to synchronize the or each simulated flying trajectory with the timecode 39. This feature allows modeling in real conditions the kinematics of the flying drones 10, and thus to get a model of a complete system operating in real conditions, such as for example an entertainment system, including movements of flying drones that belong to the system.

Preferably, the simulation software 44 is further adapted to calculate, for each simulated flying drone, one or more Beziers curve(s). These calculated Beziers curves allow to homogenize the simulated flying trajectory of each simulated flying drone.

In a particular embodiment, the simulation software 44 is further adapted to simulate one or more payload elements supported by the simulated flying drones. This allows to automatically model the behaviour of such elements, such as for example the behaviour of lighting elements, on the flying drones.

The operation of the system 1, 41 according to the invention will now be described.

Preferably, in a first step, the timecode 39 is stored in the memory 30 of the central coordinator 12.

According to the particular embodiment of Figure 3, the simulation software 44 of the simulation device 42 is then executed, upon instructions of a user, by the processor 45. The simulation software 44 then simulates the trajectory of each flying drone 10. According to this embodiment, the simulation software 44 generates each forecasted flying trajectory comprising a list 26 of 3D coordinates points, based on the results of the simulation. In a particular embodiment, each list 26 is in the form of an XML file. Preferably, in the particular embodiment of Figure 3, the simulation device 42 transmits each generated flying trajectory to the corresponding flying drone 10. This transmitting phase allows to export and to implement automatically each generated flying trajectory in the memory 16 of the corresponding flying drone 10.

Preferably, in a following step common to the embodiments of Figures 1 and 3, the timecode reader 40 reads the timecode 39. One of the digital codes of the timecode 39 corresponding to a clock initialization time of the synchronization signal 28 is then sent to the wireless emitter 29, via the control and command unit 32. During this step the wireless emitter 29 then transmits the synchronization signal 28 to the wireless receptor 20 of each flying drone 10. In the exemplary embodiments of Figures 1 and 3, some other digital codes of the timecode 39 are sent to the means 36 for controlling a lighting system and/or a sound system, via the control and command unit 32. This allows to synchronize the flying drones 10, the light and/or the sound together.

The method for controlling a flying drone trajectory according to the invention will now be described, with reference to Figure 4. This method is implemented by one of the flying drones 10 of Figures 1 or 3.

In a first step 50, the memory 16 of the flying drone 10 stores the forecasted flying trajectory defined by a list 26 of 3D coordinates points. In the exemplary embodiment of Figure 2, the forecasted flying trajectory comprises one main trajectory, defined by a main sublist 27A of 3D coordinates points, and one alternative trajectory, defined by an alternative sublist 27B of 3D coordinates points. In the exemplary embodiments of Figures 1 and 3 in which the the timecode reader 40 reads the timecode 39, the step 50 is either performed after this reading, either prior to this reading.

Preferably, according to the particular embodiments of Figures 1 and 3, the wireless receptor 20 of the flying drone 10 receives the synchronization signal 28 emitted from the timecode 39, in a following step 52. At the end of this step 52, the wireless receptor 20 of the flying drone 10 transmits the synchronization signal 28 to the control and command computer 18.

Preferably, according to the particular embodiments of Figures 1 and 3, the control and command computer 18 of the flying drone 10 synchronizes the timeline stored in the memory 16 with the received synchronization signal 28 in a following step 54. In the exemplary embodiment of Figure 2, the control and command computer 18 synchronizes the first time t0 of the list 26 with the synchronization signal 28. The feature wherein the timelines are distributed within all the flying drones 10 allows overcoming any constraint about the bandwidth required to communicate with the drones or about the number of drones used simultaneously.

In a following step 56, the flying drone 10 executes the main trajectory. More precisely, during this step 56, the control and command computer 18 of the flying drone 10 reads the main trajectory stored in the memory 16 and sends control signals to the drone directional and motorization means. The flying drone 10 then moves along said main trajectory. In the exemplary embodiment of Figure 2, the control and command computer 18 reads the content of the main sublist 27A and sends control signals to the directional and motorization means. Based on these control signals, the flying drone 10 then moves sequentially to each waypoint Xi, Yi, Zi at the corresponding time ti, with the corresponding angle orientation φᵢ.

In a following step 58, the control and command computer 18 of the flying drone 10 tests if the at least one predetermined condition is verified. In the particular embodiments of Figures 1 and 3, the control and command computer 18 tests if the signal provided by the battery sensor 25 indicates an insufficient charge level of the battery.

If the result of the test 58 is negative, the step 56 is performed.

If the result of the test 58 is positive, the flying drone 10 executes the or one of the alternative trajectory(ies) in a following step 60. More precisely, during this step 60, the control and command computer 18 of the flying drone 10 reads the alternative trajectory stored in the memory 16 and sends control signals to the drone directional and motorization means. The flying drone 10 then moves along said alternative trajectory and is repatriated onto the ground. In the exemplary embodiment of Figure 2, assuming the flying drone 10 is located at the waypoint X2, Y2, Z2 at the time of verification of the at least one predetermined condition, the control and command computer 18 reads the content of the alternative sublist 27B and sends control signals to the directional and motorization means. Based on these control signals, the flying drone 10 then moves sequentially to each waypoint X₂ⱼ, Y₂ⱼ, Z₂ⱼ at the corresponding time t₂ⱼ, with the corresponding angle orientation φ₂ⱼ.

Thus, the method for controlling a flying drone trajectory according to the invention allows providing the flying drones 10 with full autonomy as to their flying path. In particular, the method according to the invention allows the flying drones 10 to be fully autonomous as to their repatriation along an alternative trajectory in case of emergency. This enhances the safety of the repatriation operation.

A person of skill in the art would readily recognize that the functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. In particular, although the invention is described with reference to one alternative trajectory, it should be appreciated that each flying drone can have multiple stored alternative trajectories. For example, each flying drone can have one alternative trajectory for each waypoint of the main trajectory. Similarly, although the invention is described with reference to one predetermined condition to be verified, it should be appreciated that each flying drone can have multiple preprogrammed predetermined conditions, thus defining a set of conditions to be met simultaneously, or independently, in order that the flying drone moves along the alternative trajectory.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Flying drone (10) comprising:
• a memory (16) for storing a forecasted flying trajectory, said trajectory being defined by a list (26) of 3D coordinates points (Xi, Yi, Zi, X₂ⱼ, Y₂ⱼ, Z₂ⱼ);
• a control and command computer (18) for driving drone directional and motorization means, said control and command computer (18) being connected to the memory (16) for reading the forecasted trajectory so that the flying drone (10) is able to move along said forecasted trajectory;
**characterized in that**:
• the forecasted flying trajectory comprises a main trajectory and at least one alternative trajectory, said main and alternative trajectories being each defined by a sublist (27A, 27B) of 3D coordinates points (Xi, Yi, Zi, X₂ⱼ, Y₂ⱼ, Z₂ⱼ); and
• the control and command computer (18) is adapted to read said alternative trajectory in the memory (16) so that the flying drone (10) is able to move along said alternative trajectory only if at least one predetermined condition is verified.

2. Flying drone (10) according to claim 1, wherein the flying drone (10) further comprises at least one sensor (25) adapted to provide sensor data to the control and command computer (18), the verification of said at least one predetermined condition being based at least on said sensor data.

3. Flying drone (10) according to claim 2, wherein the sensor (25) is selected from the group consisiting of : an accelerometer, a gyroscope, a magnetometer, a GNSS receiver, a battery sensor, a motor position sensor, a sensor of a motor current, a Hall effect sensor, a barometric sensor and a virtual sensing type sensor.

4. Flying drone (10) according to any one of the preceding claims, wherein the sublist (27B) defining the alternative trajectory is associated to one of the 3D coordinates points (Xi, Yi, Zi) of the sublist (27A) defining the main trajectory, said 3D coordinates point (X2, Y2, Z2) being the first point of the sublist (27B) defining the alternative trajectory.

5. Flying drone (10) according to any one of the preceding claims, wherein the 3D coordinates points (Xi, Yi, Zi, X₂ⱼ, Y₂ⱼ, Z₂ⱼ) are stored as GNSS coordinates and said flying drone (10) further comprises a GNSS receiver (22) connected to said control and command computer (18) for controlling the drone trajectory.

6. Flying drone (10) according to any one of the preceding claims, wherein the flying drone (10) further comprises:
• a wireless receptor (20) able to receive a synchronization signal (28) emitted by a timecode (39);
• the 3D coordinates points (Xi, Yi, Zi, X₂ⱼ, Y₂ⱼ, Z₂ⱼ) are associated to a timeline;
• the control and command computer (18) is adapted for synchronizing the flying drone timeline with the synchronization signal (28).

7. Flying drone (10) according to claim 6, wherein the timeline is implemented by adding to each 3D coordinates point (Xi, Yi, Zi, X₂ⱼ, Y₂ⱼ, Z₂ⱼ) a time (ti, t₂ⱼ) relative to either the time of the previous 3D coordinates point either to a reference time (Ti, T₂ⱼ).

8. System (1; 41) comprising a plurality of flying drones (10) according to any one of the preceding claims and a central coordinator (12) comprising a wireless emitter (29), the wireless emitter (29) being adapted for transmitting data (28) to the flying drones (10) via a wireless data link (38).

9. System (1; 41) according to claim 8 when each flying drone (10) is according to claim 6 or 7, wherein the central coordinator (12) stores a timecode (39) and further comprises a timecode reading module (40) connected to the wireless emitter (29), the wireless emitter (29) being adapted to transmit to the wireless receptor (20) of each drone (10) a synchronization signal (28) from the timecode (39).

10. System (1; 41) according to claim 9, wherein the central coordinator (12) further comprises means (36) for controlling a lighting system and/or a sound system and said timecode (39) has light and/or sound synchronization elements so that the drones (10), the light and/or the sound are synchronized together.

11. System (1; 41) according to any one of claims 8 to 10, wherein the central coordinator (12) further comprises a control and command unit (32) adapted for triggering the execution of the or each alternative trajectory in each flying drone (10), said control and command unit (32) being connected to the wireless emitter (29).

12. Method for controlling a flying drone trajectory, said drone (10) comprising:
• a memory (16) for storing a forecasted flying trajectory, the forecasted flying trajectory comprising a main trajectory and at least one alternative trajectory;
• a control and command computer (18) for driving drone directional and motorization means, said control and command computer (18) being connected to the memory (16) for reading the forecasted trajectory so that the flying drone (10) is able to move along said forecasted trajectory, said control and command computer (18) being adapted to read said alternative trajectory in the memory (16) so that the flying drone (10) is able to move along said alternative trajectory only if at least one predetermined condition is verified;
said method comprising:
• storing (50) in said memory (16) a forecasted flying trajectory defined by a list (26) of 3D coordinates points (Xi, Yi, Zi, X₂ⱼ, Y₂ⱼ, Z₂ⱼ), the main and alternative trajectories being each defined by a sublist (27A, 27B) of 3D coordinates points (Xi, Yi, Zi, X₂ⱼ, Y₂ⱼ, Z₂ⱼ);
• executing (56) the main trajectory;
• testing (58) if the at least one predetermined condition is verified;
• if the at least one predetermined condition is verified, executing (60) the alternative trajectory.

13. Method according to claim 12, wherein the flying drone (10) further comprises a wireless receptor (20), the 3D coordinates points (Xi, Yi, Zi, X₂ⱼ, Y₂ⱼ, Z₂ⱼ) of the list (26) of 3D coordinates points are associated to a timeline and the control and command computer (18) is adapted for synchronizing the flying drone timeline with a synchronization signal (28), and wherein the method further comprises, between the step (50) of storing the forecasted flying trajectory and the step (56) of executing the main trajectory:
• receiving (52) through the wireless receptor (20) a synchronization signal (28) emitted by a timecode (39);
• synchronizing (54) the timeline with the synchronization signal (28).
